# EUROPEAN PATENT APPLICATION

(11) **EP 4 553 757 A1**
(43) Date of publication of application: **14.05.2025**
(21) Application number: 23877436.8
(22) Date of filing: 17.07.2023
(51) Int. Cl.: G06T 5/00, G06T 5/50, H04N 23/57, G06N 20/00

(54) **METHOD FOR RESTORING UDC IMAGE, AND ELECTRODE DEVICE**

(30) Priority: 11.10.2022 US 202218045696; 24.10.2022 US 202218049213; 13.07.2023 KR 20230091347
(71) Applicant: Samsung Electronics Co., Ltd., Suwon-si, Gyeonggi-do 16677 (KR)
(72) Inventor: XU, Yibo, Gyeonggi-do 16677 (KR); LIU, Weidi, Gyeonggi-do 16677 (KR); SHEIKH, Hamid Rahim, Gyeonggi-do 16677 (KR); LEE, John Seokjun, Gyeonggi-do 16677 (KR)
(74) Representative: Appleyard Lees IP LLP
(86) International application number: PCT/KR2023/010204
(87) International publication number: WO 2024/080506

(57) **Abstract**

A method includes obtaining an under-display camera (UDC) image captured using a camera located under a display. The method also includes processing the UDC image based on a machine learning model for restoring the UDC image by using at least one processing device of an electronic device. The method further includes displaying or storing the restored image corresponding to the UDC image. The machine learning model is trained using (i) a ground truth image and (ii) a synthetic image generated using the ground truth image and a point spread function that is based on an optical transmission model of the display.

## Description

### Technical Field

The disclosure relates to machine learning and image processing systems. More specifically, the disclosure relates to machine learning model training using synthetic data for under-display camera (UDC) image restoration, and a method and electronic device for performing UDC image restoration by using a trained machine learning model.

### Background Art

Under-display cameras (UDCs) are being used in various mobile electronic devices and in other electronic devices such as smartphones and tablet computers. A UDC refers to a camera positioned underneath a display of an electronic device. Oftentimes, a UDC may be used as a forward-facing camera to capture still or video images of a user of an electronic device. This approach helps to obscure the camera and reduce or eliminate the need to include circular, pill-shaped, notched, or other cutouts in a display. Due to optical diffraction and noise generated by having a display in front of a camera lens, image restoration is performed in order to improve the quality of images captured by a UDC.

### Disclosure of Invention

### Solution to Problem

In an embodiment of the disclosure, an electronic device includes a display and a camera located under the display and configured to capture an under-display cameras (UDC) image. The electronic device also includes at least one memory configured to store instructions. The electronic device further includes at least one processor configured to execute the instructions to obtain the UDC image, process the UDC image based on a machine learning model for restoring the UDC image, and display or store the restored image corresponding to the UDC image. The machine learning model is trained using (i) a ground truth image and (ii) a synthetic image generated using the ground truth image and a point spread function that is based on an optical transmission model of the display.

In an embodiment of the disclosure, a method includes obtaining a UDC image captured using a camera located under a display. The method also includes processing the UDC image based on a machine learning model for restoring the UDC image by using at least one processing device of an electronic device. The method further includes displaying or storing the restored image corresponding to the UDC image. The machine learning model is trained using (i) a ground truth image and (ii) a synthetic image generated using the ground truth image and a point spread function that is based on an optical transmission model of the display.

In an embodiment of the disclosure, a non-transitory computer readable medium includes instructions that when executed cause at least one processor to obtain a UDC image captured using a camera located under a display. The non-transitory computer readable medium also contains instructions that when executed cause the at least one processor to process the UDC image based on a machine learning model for restoring the UDC image. The non-transitory computer- readable medium further contains instructions that when executed cause the at least one processor to display or store the restored image corresponding to the UDC image. The machine learning model is trained using (i) a ground truth image and (ii) a synthetic image generated using the ground truth image and a point spread function that is based on an optical transmission model of the display.

Other technical features may be readily apparent to one skilled in the art from the following figures, descriptions, and claims.

In the disclosure, the terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like.

Moreover, various functions described below may be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data may be permanently stored and media where data may be stored and later overwritten, such as a rewritable optical disc or an erasable memory device.

As used here, terms and phrases such as "have," "may have," "include," or "may include" a feature (like a number, function, operation, or component such as a part) indicate the existence of the feature and do not exclude the existence of other features. Also, as used here, the phrases "A or B," "at least one of A and/or B," or "one or more of A and/or B" may include all possible combinations of A and B. For example, "A or B," "at least one of A and B," and "at least one of A or B" may indicate all of (1) including at least one A, (2) including at least one B, or (3) including at least one A and at least one B. Further, as used here, the terms "first" and "second" may modify various components regardless of importance and do not limit the components. These terms are only used to distinguish one component from another. For example, a first user device and a second user device may indicate different user devices from each other, regardless of the order or importance of the devices. A first component may be denoted a second component and vice versa without departing from the scope of the disclosure.

It will be understood that, when an element (such as a first element) is referred to as being (operatively or communicatively) "coupled with/to" or "connected with/to" another element (such as a second element), it may be coupled or connected with/to the other element directly or via a third element. In contrast, it will be understood that, when an element (such as a first element) is referred to as being "directly coupled with/to" or "directly connected with/to" another element (such as a second element), no other element (such as a third element) intervenes between the element and the other element.

As used here, the phrase "configured (or set) to" may be interchangeably used with the phrases "suitable for," "having the capacity to," "designed to," "adapted to," "made to," or "capable of" depending on the circumstances. The phrase "configured (or set) to" does not essentially mean "specifically designed in hardware to." Rather, the phrase "configured to" may mean that a device may perform an operation together with another device or parts. For example, the phrase "processor configured (or set) to perform A, B, and C" may mean a generic-purpose processor (such as a CPU or application processor) that may perform the operations by executing one or more software programs stored in a memory device or a dedicated processor (such as an embedded processor) for performing the operations.

The terms and phrases as used here are provided merely to describe some embodiments of the disclosure but not to limit the scope of other embodiments of the disclosure. It is to be understood that the singular forms "a," "an," and "the" include plural references unless the context clearly dictates otherwise. All terms and phrases, including technical and scientific terms and phrases, used here have the same meanings as commonly understood by one of ordinary skill in the art to which the embodiments of the disclosure belong. It will be further understood that terms and phrases, such as those defined in commonly-used dictionaries, should be interpreted as having a meaning that is consistent with their meaning in the context of the relevant art and will not be interpreted in an idealized or overly formal sense unless expressly so defined here. In some cases, the terms and phrases defined here may be interpreted to exclude embodiments of the disclosure.

Examples of an "electronic device" according to embodiments of the disclosure may include at least one of a smartphone, a tablet personal computer (PC), a mobile phone, a video phone, an e-book reader, a desktop PC, a laptop computer, a netbook computer, a workstation, a personal digital assistant (PDA), a portable multimedia player (PMP), an MP3 player, a mobile medical device, a camera, or a wearable device (such as smart glasses, a head-mounted device (HMD), electronic clothes, an electronic bracelet, an electronic necklace, an electronic accessory, an electronic tattoo, a smart mirror, or a smart watch). Other examples of an electronic device include a smart home appliance. Examples of the smart home appliance may include at least one of a television, a digital video disc (DVD) player, an audio player, a refrigerator, an air conditioner, a cleaner, an oven, a microwave oven, a washer, a drier, an air cleaner, a set-top box, a home automation control panel, a security control panel, a TV box (such as SAMSUNG HOMESYNC, APPLETV, or GOOGLE TV), a smart speaker or speaker with an integrated digital assistant (such as SAMSUNG GALAXY HOME, APPLE HOMEPOD, or AMAZON ECHO), a gaming console (such as an XBOX, PLAYSTATION, or NINTENDO), an electronic dictionary, an electronic key, a camcorder, or an electronic picture frame. Still other examples of an electronic device include at least one of various medical devices (such as diverse portable medical measuring devices (like a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global positioning system (GPS) receiver, an event data recorder (EDR), a flight data recorder (FDR), an automotive infotainment device, a sailing electronic device (such as a sailing navigation device or a gyro compass), avionics, security devices, vehicular head units, industrial or home robots, automatic teller machines (ATMs), point of sales (POS) devices, or Internet of Things (IoT) devices (such as a bulb, various sensors, electric or gas meter, sprinkler, fire alarm, thermostat, street light, toaster, fitness equipment, hot water tank, heater, or boiler). Other examples of an electronic device include at least one part of a piece of furniture or building/structure, an electronic board, an electronic signature receiving device, a projector, or various measurement devices (such as devices for measuring water, electricity, gas, or electromagnetic waves). Note that, according to an embodiment of the disclosure, an electronic device may be one or a combination of the above-listed devices. According to an embodiment of the disclosure, the electronic device may be a flexible electronic device. The electronic device disclosed here is not limited to the above-listed devices and may include new electronic devices depending on the development of technology.

In the following description, electronic devices are described with reference to the accompanying drawings, according to various embodiments of the disclosure. As used here, the term "user" may denote a human or another device (such as an artificial intelligent electronic device) using the electronic device.

Definitions for other certain words and phrases may be provided throughout this patent document. Those of ordinary skill in the art should understand that in many if not most instances, such definitions apply to prior as well as future uses of such defined words and phrases.

None of the description in this application should be read as implying that any particular element, operation, or function is an essential element that must be included in the claim scope. The scope of patented subject matter is defined only by the claims. Use of any other term, including without limitation "mechanism," "module," "device," "unit," "component," "element," "member," "apparatus," "machine," "system," "processor," or "controller," within a claim may be understood by the Applicant to refer to structures known to those skilled in the relevant art.

### Brief Description of Drawings

For a more complete understanding of the disclosure and its advantages, reference is now made to the following description taken in conjunction with the accompanying drawings, in which like reference numerals represent like parts:
FIG. 1 illustrates an example network configuration including an electronic device according to an embodiment of the disclosure;
FIG. 2 illustrates an example architecture for generating training data and training a machine learning model to perform under-display camera (UDC) image restoration according to an embodiment of the disclosure;
FIG. 3 illustrates an example optical transmission model used in the architecture of FIG. 2 according to an embodiment of the disclosure;
FIGS. 4A and 4B illustrate example display grid patterns and corresponding point spread functions, according to an embodiment of the disclosure;
FIG. 5 illustrates an example display grid pattern and a corresponding spatially-variant point spread function, according to an embodiment of the disclosure;
FIG. 6 illustrates an example architecture for generating synthetic ground truth images by using a dead leaves model according to an embodiment of the disclosure;
FIGS. 7A and 7B illustrate an example natural image and an example synthetic ground truth image generated using a dead leaves model according to an embodiment of the disclosure;
FIGS. 8A and 8B illustrate example results obtained using a machine learning model trained to perform UDC image restoration according to an embodiment of the disclosure;
FIG. 9 illustrates an example method of generating training data and training a machine learning model to perform UDC image restoration according to an embodiment of the disclosure; and
FIG. 10 illustrates an example method of using a trained machine learning model to perform UDC image restoration according to an embodiment of the disclosure.
FIGS. 11A and 11B illustrate an example operation of an electronic device performing UDC image restoration according to an embodiment of the disclosure.
FIG. 12 illustrates an example method of performing UDC image reconstruction according to an embodiment of the disclosure.

### Mode for the Invention

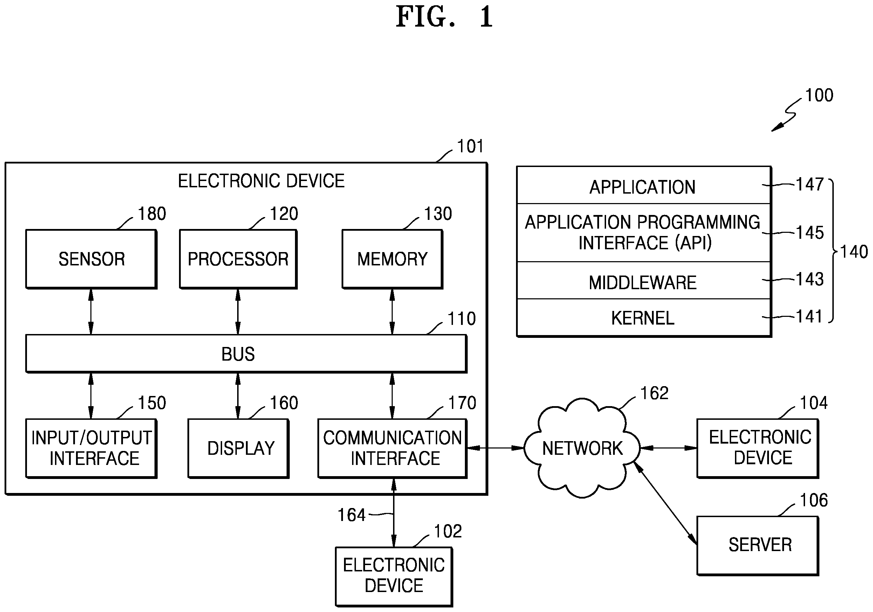

FIGS. 1 through 10, discussed below, and the various embodiments of the disclosure are described with reference to the accompanying drawings. However, it should be appreciated that the disclosure is not limited to these embodiments, and all changes and/or equivalents or replacements thereto also belong to the scope of the disclosure. The same or similar reference denotations may be used to refer to the same or similar elements throughout the specification and the drawings.

As noted above, under-display cameras (UDCs) are being used in various mobile electronic devices and other electronic devices, such as smartphones and tablet computers. A UDC may represent a camera positioned underneath a display of an electronic device. In the disclosure, the UDC may be referred to as an under-display camera. Often times, the UDC may be used as a forward-facing camera to capture still or video images of a user of an electronic device. This approach may help to obscure the camera and reduce or eliminate the need to include circular, pill-shaped, notched, or other cutouts in a display. Due to optical diffraction and noise generated by having a display in front of a camera lens, image restoration is performed in order to improve the quality of images captured by a UDC.

In some cases, deep learning networks or neural networks are being investigated for use in performing UDC image restoration. These deep learning networks or neural networks typically require large real datasets in order to be trained effectively in performing UDC image restoration. However, constructing a training dataset with real image pairs for UDCs is difficult. Among other things, it is difficult, time-consuming, and costly to capture and label real image pairs for use in training a deep learning network or neural network. Moreover, the real image pairs typically include an image captured by an actual UDC and an image captured by a different camera that is not obscured. Capturing different images using different cameras often results in subtle or significant differences in the images, such as due to object motion or different positions of the cameras. These differences may negatively impact or even prevent training of a deep learning network or neural network. Further, various attempts to simulate the effects of a display on a UDC assume that blur generated by the display is constant, which is not always the case. In addition, the primary optical diffraction to light captured by a UDC is the display itself, and the actual layout of a display may vary (such as due to display technology advancements and varying designs of wiring used in or with the displays). As a result, even if a deep learning network or neural network may be trained to effectively remove blur caused by one display, the same deep learning network or neural network cannot be used with a different display having a different layout.

The disclosure may provide techniques for machine learning model training using synthetic data for UDC image restoration. As described in more detail below, one or more ground truth images may be generated, and one or more corresponding training images (also referred to as synthetic sensor images) may be generated using the ground truth image(s). Each synthetic sensor image may represent an image that is simulated as being captured by a UDC. In an embodiment, each ground truth image may be a synthetic image, such as a synthetic image generated using a "dead leaves" model and one or more natural images. The synthetic sensor image(s) may be generated by performing one or more convolutions of the ground truth image(s) based on a spatially-variant point spread function (also referred to as a blur kernel). The spatially-variant point spread function is associated with the UDC and may be based on an optical transmission model and a layout of a display associated with the UDC. In some cases, the optical transmission model may model the structure of the UDC (such as by using a lens and an imaging sensor), and the spatially-variant point spread function may be determined based on how light may interact with the display and the lens before striking the imaging sensor.

Once one or more ground truth images and one or more corresponding training images are obtained, one or more image pairs may be used during training of a machine learning model, where the machine learning model is trained to perform UDC point spread function inversion. This trains the machine learning model to reduce or minimize blur generated by the presence of the display over the UDC. The trained machine learning model may be placed into operations for use during inferencing, such as by deploying the trained machine learning model to one or more end user devices so that the trained machine learning model may be applied to actual images captured using one or more actual UDCs.

In this way, it may be possible to effectively train a machine learning model to perform UDC image restoration using partially- or completely-synthetic training data. As a result, the training data may be obtained in a much more timely and cost-effective manner and with much less effort. Moreover, these techniques avoid using images from different cameras as image pairs in the training data, which may eliminate problems associated with moving objects within scenes or using images captured from slightly different perspectives. Further, these approaches may easily incorporate spatial variations in blur that may be generated by a display positioned over a UDC. In addition, these techniques may be used to easily generate training data and train machine learning models for use with different displays, enabling application of trained machine learning models for use with a wide variety of UDCs used with a wide variety of display layouts.

In the disclosure, a machine learning model may include a plurality of neural network layers. Each of the plurality of neural network layers has a plurality of weight values and performs a neural network operation through an operation between an operation result of a previous layer and the plurality of weight values. The plurality of weight values of each of the plurality of neural network layers may be optimized by a training result of the machine learning model. For example, the plurality of weight values may be updated such that a loss value or a cost value obtained by the machine learning model during a training process is minimized. The machine learning model may include a deep neural network (DNN), for example, a convolutional neural network (CNN), a recurrent neural network (RNN), a restricted Boltzmann machine (RBM), a deep belied network (DBN), a bidirectional recurrent deep neural network (BRDNN), or a deep Q-network, but the disclosure is not limited thereto.

FIG. 1 illustrates an example network configuration 100 including an electronic device according to an embodiment of the disclosure. The embodiment of the network configuration 100 shown in FIG. 1 is for illustration only. Other embodiments of the network configuration 100 may be used without departing from the scope of the disclosure.

In an embodiment of the disclosure, an electronic device 101 may be included in the network configuration 100. The electronic device 101 may include at least one of a bus 110, a processor 120, a memory 130, an input/output (I/O) interface 150, a display 160, a communication interface 170, or a sensor 180. In an embodiment, the electronic device 101 may exclude at least one of these components or may add at least one other component. The bus 110 may include a circuit for connecting the components 120 to 180 with one another and for transferring communications (such as control messages and/or data) between the components.

The processor 120 may include one or more of a central processing unit (CPU), an application processor (AP), or a communication processor (CP). The processor 120 may perform control on at least one of the other components of the electronic device 101 and/or perform an operation or data processing relating to communication. In an embodiment, the processor 120 may be a graphics processor unit (GPU). As described below, the processor 120 may be used to generate training data and train one or more machine learning models for use during UDC image restoration. Also or alternatively, the processor 120 may be used to apply one or more trained machine learning models during UDC image restoration.

The memory 130 may include a volatile and/or non-volatile memory. For example, the memory 130 may store commands or data related to at least one other component of the electronic device 101. In an embodiment of the disclosure, the memory 130 may store software and/or a program 140. The program 140 may include, for example, a kernel 141, middleware 143, an application programming interface (API) 145, and/or an application program (or "application") 147. At least a portion of the kernel 141, the middleware 143, or the API 145 may be denoted an operating system (OS).

The kernel 141 may control or manage system resources (such as the bus 110, processor 120, or memory 130) used to perform operations or functions implemented in other programs (such as the middleware 143, the API 145, or the application 147). The kernel 141 may provide an interface that allows the middleware 143, the API 145, or the application 147 to access the individual components of the electronic device 101 to control or manage the system resources. The application 147 may include one or more applications for generating training data and training one or more machine learning models for use during UDC image restoration. Also or alternatively, the application 147 may include one or more applications for applying one or more trained machine learning models during UDC image restoration. These functions may be performed by a single application or by multiple applications that each carries out one or more of these functions. The middleware 143 may function, for example, as a relay to allow the API 145 or the application 147 to communicate data with the kernel 141. A plurality of applications 147 may be provided. The middleware 143 may control work requests received from the applications 147, such as by allocating the priority of using the system resources of the electronic device 101 (like the bus 110, the processor 120, or the memory 130) to at least one of the plurality of applications 147. The API 145 is an interface allowing the application 147 to control functions provided from the kernel 141 or the middleware 143. For example, the API 145 may include at least one interface or function (such as a command) for filing control, window control, image processing, or text control.

The I/O interface 150 may serve as an interface that may, for example, transfer commands or data input from a user or other external devices to other component(s) of the electronic device 101. The I/O interface 150 may also output commands or data received from other component(s) of the electronic device 101 to the user or the other external device.

The display 160 includes, for example, a liquid crystal display (LCD), a light emitting diode (LED) display, an organic light emitting diode (OLED) display, a quantum-dot light emitting diode (QLED) display, a microelectromechanical systems (MEMS) display, or an electronic paper display. The display 160 may also be a depth-aware display, such as a multi-focal display. The display 160 may display, for example, various contents (such as text, images, videos, icons, or symbols) to the user. The display 160 may include a touchscreen and may receive, for example, a touch, gesture, proximity, or hovering input using an electronic pen or a body portion of the user.

The communication interface 170, for example, may set up communication between the electronic device 101 and an external electronic device (such as a first electronic device 102, a second electronic device 104, or a server 106). For example, the communication interface 170 may be connected with a network 162 or 164 through wireless or wired communication to communicate with the external electronic device. The communication interface 170 may be a wired or wireless transceiver or any other component for transmitting and receiving signals, such as images. In an embodiment, the electronic device 101 may receive a trained machine learning model from an external source through the communication interface 170.

The electronic device 101 may further include one or more sensors 180 that may meter a physical quantity or detect an activation state of the electronic device 101 and convert metered or detected information into an electrical signal. For example, one or more sensors 180 include one or more cameras or other imaging sensors, which may be used to capture images of scenes. The one or more cameras or other imaging sensors include one or more UDCs, each of which represents a camera positioned under the display 160. The sensor(s) 180 may also include one or more buttons for touch input, one or more microphones, a gesture sensor, a gyroscope or gyro sensor, an air pressure sensor, a magnetic sensor or magnetometer, an acceleration sensor or accelerometer, a grip sensor, a proximity sensor, a color sensor (such as an RGB sensor), a bio-physical sensor, a temperature sensor, a humidity sensor, an illumination sensor, an ultraviolet (UV) sensor, an electromyography (EMG) sensor, an electroencephalogram (EEG) sensor, an electrocardiogram (ECG) sensor, an infrared (IR) sensor, an ultrasound sensor, an iris sensor, or a fingerprint sensor. The sensor(s) 180 may further include an inertial measurement unit, which may include one or more accelerometers, gyroscopes, and other components. In addition, the sensor(s) 180 may include a control circuit for controlling at least one of the sensors included here. Any of these sensor(s) 180 may be located within the electronic device 101.

The first external electronic device 102 or the second external electronic device 104 may be a wearable device or an electronic device-mountable wearable device (such as an HMD). When the electronic device 101 is mounted in the electronic device 102 (such as the HMD), the electronic device 101 may communicate with the electronic device 102 through the communication interface 170. The electronic device 101 may be directly connected with the electronic device 102 to communicate with the electronic device 102 without involving with a separate network. The electronic device 101 may also be an augmented reality wearable device, such as eyeglasses, that include one or more cameras.

The wireless communication may use at least one of, for example, long term evolution (LTE), long term evolution-advanced (LTE-A), 5th generation wireless system (5G), millimeter-wave or 60 GHz wireless communication, Wireless USB, code division multiple access (CDMA), wideband code division multiple access (WCDMA), universal mobile telecommunication system (UMTS), wireless broadband (WiBro), or global system for mobile communication (GSM), as a cellular communication protocol. The wired connection may include, for example, at least one of a universal serial bus (USB), high definition multimedia interface (HDMI), recommended standard 232 (RS-232), or plain old telephone service (POTS). The network 162 includes at least one communication network, such as a computer network (like a local area network (LAN) or wide area network (WAN)), Internet, or a telephone network.

The first and second external electronic devices 102 and 104 and server 106 each may be a device of the same or a different type from the electronic device 101. In an embodiment of the disclosure, the server 106 includes a group of one or more servers. Also, in an embodiment of the disclosure, all or some of the operations executed on the electronic device 101 may be executed on another or multiple other electronic devices (such as the electronic devices 102 and 104 or the server 106). Further, in an embodiment of the disclosure, when the electronic device 101 should perform some function or service automatically or at a request, the electronic device 101, instead of executing the function or service on its own or additionally, may request another device (such as the electronic devices 102 and 104 or the server 106) to perform at least some functions associated therewith. The other electronic device (such as the electronic devices 102 and 104 or the server 106) may execute the requested functions or additional functions and transfer a result of the execution to the electronic device 101. The electronic device 101 may provide a requested function or service by processing the received result as it is or additionally. To this end, for example, a cloud computing, distributed computing, or client-server computing technique may be used. While FIG. 1 shows that the electronic device 101 includes the communication interface 170 to communicate with the external electronic device 104 or server 106 via the network 162, the electronic device 101 may be independently operated without a separate communication function according to an embodiment of the disclosure.

The server 106 may include the same or similar components as the electronic device 101 (or a suitable subset thereof). The server 106 may support to drive the electronic device 101 by performing at least one of operations (or functions) implemented on the electronic device 101. For example, the server 106 may include a processing module or processor that may support the processor 120 implemented in the electronic device 101. As described below, the server 106 may be used to generate training data and train one or more machine learning models for use during UDC image restoration. Also or alternatively, the server 106 may be used to apply one or more trained machine learning models during UDC image restoration.

Although FIG. 1 illustrates one example of the network configuration 100 including the electronic device 101, various changes may be made to FIG. 1. For example, the network configuration 100 may include any number of each component in any suitable arrangement. In general, computing and communication systems come in a wide variety of configurations, and FIG. 1 does not limit the scope of the disclosure to any particular configuration. Also, while FIG. 1 illustrates one operational environment in which various features disclosed in this patent document may be used, these features may be used in any other suitable system.

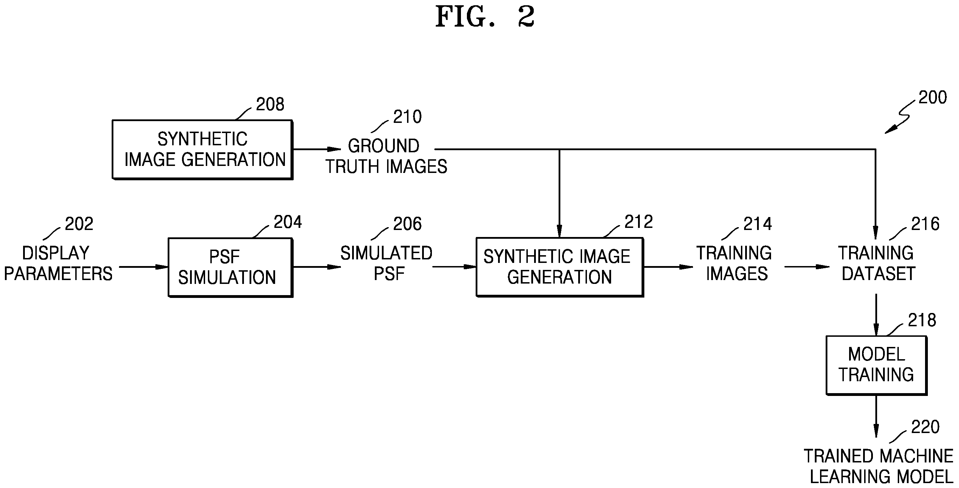

FIG. 2 illustrates an example architecture 200 for generating training data and training a machine learning model to perform UDC image restoration according to an embodiment of the disclosure. For ease of explanation, the architecture 200 shown in FIG. 2 is described as being implemented on or supported by the server 106 in the network configuration 100 of FIG. 1. However, the architecture 200 shown in FIG. 2 may be used with any other suitable device(s) and in any other suitable system(s), such as when the architecture 200 is implemented on or supported by the electronic device 101.

As shown in FIG. 2, the architecture 200 may receive one or more display parameters 202, which represent one or more characteristics of the design of a display to be used with a UDC. For example, the one or more display parameters 202 may include an image file (such as a PNG or other binary file) that represents the layout or other physical structure of the display to be used with a UDC. In an embodiment, for example, the display 160 may have a design that represents a repeating pattern, such as when the same pattern repeats in a grid (meaning the pattern is replicated in rows and columns of the display 160). In those cases, the one or more display parameters 202 may include an image of the pattern within a single portion of the display, and it may be assumed that the remaining portions of the display include the same repeating pattern. However, the layout or other physical structure of the display to be used with a UDC may be defined in any other suitable manner.

The one or more display parameters 202 are provided to a PSF simulation function 204, which may generally operate to perform one or more simulations in order to identify at least one simulated point spread function 206 for the display to be used with a UDC. The point spread function 206 may estimate the blur that may be generated when light passes through the display to the UDC. For example, the PSF simulation function 204 may use an optical transmission model that models the structure of the UDC. As a particular example, the optical transmission model may model the structure of the UDC using a lens and an imaging sensor. The PSF simulation function 204 may use this modeled structure of the UDC and the one or more display parameters 202 defining the layout or other structure of the display to be used with the UDC in order to simulate how light is modified (and possibly blurred) while passing through the display and the lens before striking the imaging sensor of the UDC. As described below, this may depend on various factors, such as a distance between the display and the lens and a distance between the lens and the imaging sensor.

Overall, the PSF simulation function 204 may be used to identify how blurring is generated by a display having a design as specified by the display parameter(s) 202 when light passes through such a display to a UDC. The PSF simulation function 204 may perform this function for any suitable display design, such as for displays 160 having different physical layouts or other physical design parameters that affect light. Moreover, the PSF simulation function 204 may perform this function regardless of the angle of incident light on the display.

In an embodiment, the point spread function 206 may represent a spatially-variant point spread function. When the point spread function 206 represents the spatially-variant point spread function, this may mean that the blurring represented by the point spread function 206 may differ depending on the location of the display.

The architecture 200 also includes a synthetic image generation function 208, which may generally operate to produce one or more ground truth images 210. Each ground truth image 210 represents an image to be used during machine learning model training, where an output from the machine learning model being trained is compared to the ground truth image 210 in order to determine whether the machine learning model needs to be adjusted. The synthetic image generation function 208 may use any suitable technique to generate the ground truth image(s) 210. In an embodiment, the synthetic image generation function 208 uses a "dead leaves" model in which the "leaves" of each ground truth image 210 are approximated using circular discs with random textures and in which one or more color distributions of the leaves are based on one or more natural color distributions of natural image samples from at least one natural image. However, any other suitable technique may be used to produce the ground truth images 210, such as when the ground truth images 210 are generated using one or more generative adversarial networks, generated using one or more transformer-based neural networks, or generated by performing random natural object and background fusion. Also note that any suitable number of ground truth images 210 may be generated here.

The ground truth image(s) 210 and the at least one simulated point spread function 206 may be provided to another synthetic image generation function 212, which may generally operate to produce one or more training images 214. Each training image 214 may represent an image that may be provided to a machine learning model during training so that the machine learning model may generate an output that is compared against the associated ground truth image 210. For example, the synthetic image generation function 212 may perform at least one convolution of each ground truth image 210 based on the point spread function 206 in order to generate the corresponding training image 214 (a synthetic sensor image). By applying the point spread function 206 to the ground truth image 210, this may modify the ground truth image 210 based on the blur that is expected to occur when light passes through a display prior to reaching a UDC. In other words, the training image 214 may represent a simulated image that might be captured by the UDC, assuming the UDC was being used to capture an image of a scene as defined by the associated ground truth image 210 and as modified by the optical diffraction and noise from the display over the UDC.

Each training image 214 and its associated ground truth image 210 may form an image pair that is included in at least one training dataset 216. The training dataset 216 is used by a model training function 218 to train at least one machine learning model 220. During the training process, the training images 214 may be provided to a machine learning model being trained, and the machine learning model may process the training images 214 in order to generate output images. Each output image is compared to the associated ground truth image 210, and differences between the output image produced by the machine learning model and the ground truth image 210 are identified and used to compute a loss value. The loss value may be representative of the errors in the operation of the machine learning model being trained. Various weights or other parameters of the machine learning model may be modified based on the computed loss values, and the training images 214 may again be processed by the machine learning model so that additional output images are generated and compared to the ground truth images 210. Ideally, the machine learning model may improve over time and produce output images that are more and more similar to the ground truth images 210. This iterative process may continue until the machine learning model generates output images having a suitably low loss or until some other criterion or criteria are met (such as a specified number of training iterations completing or a specified amount of training time elapsing).

Here, the machine learning model 220 is trained to reduce or minimize blur contained in the training images 214, where that blur was artificially generated based on the expected blurring from the layout or other physical structure of a display over a UDC. Effectively, the machine learning model 220 is trained here to perform point spread function inversion, which means that the machine learning model 220 is trained to attempt to invert the blurring caused by light passing through a display positioned over a UDC. This allows the machine learning model 220 to be trained to perform UDC image restoration, where the point spread function inversion may remove at least a substantial portion of the blur caused by light passing through the display positioned over the UDC. This helps images generated using the UDC to appear as if they were captured by a camera not positioned under the display. Images generated by the trained machine learning model 220 may therefore have little or no blur generated by the presence of the display over the under-display camera.

In this way, the machine learning model 220 may be trained to effectively reduce or minimize blur generated by positioning a camera under a display. Moreover, this process may be easily modified to account for different layouts or other physical designs of different displays, thereby allowing machine learning models 220 to be trained to perform UDC image restoration for different cameras positioned under different types of displays. Further, in an embodiment, the training dataset 216 may be formed using only synthetic images, meaning only images that are artificially generated and not images captured of real scenes. Because the training dataset 216 may be generated artificially in a manner that accounts for the specific design of a display to be used with a UDC, this may significantly speed up the process of obtaining training data for a machine learning model.

In addition, various types of machine learning model architectures may be used as or with the machine learning model 220, such as a convolutional neural network (CNN), deep neural network (DNN), other type of neural network, or other type of machine learning model. Because the architecture 200 here provides a much faster and easier approach for training machine learning models, it is possible for multiple (and possibly numerous) machine learning model architectures to be designed and trained so that the machine learning model or models that provide the best results may be selected for subsequent use. Finally, because the training dataset 216 may be fully generated synthetically, it is possible for the images in the training dataset 216 to be within any specified color space (such as the RGB, sRGB, YUV, or RAW image space) and have any desired bit-depth (such as when the image data includes 8-bit, 12-bit, or 16-bit data values).

It should be noted that the functions shown in or described with respect to FIG. 2 may be implemented in the electronic device 101, the server 106, or other device in any suitable manner. For example, in an embodiment, at least some of the functions shown in or described with respect to FIG. 2 may be implemented or supported using one or more software applications or other software instructions that are executed by the processor 120 of the electronic device 101, the server 106, or other device. In an embodiment, at least some of the functions shown in or described with respect to FIG. 2 may be implemented or supported using dedicated hardware components. In general, the functions shown in or described with respect to FIG. 2 may be performed using any suitable hardware or any suitable combination of hardware and software/firmware instructions. Also, the functions shown in or described with respect to FIG. 2 may be performed by a single device or by multiple devices.

Although FIG. 2 illustrates one example of the architecture 200 for generating training data and training a machine learning model to perform UDC image restoration, various changes may be made to FIG. 2. For example, various components in FIG. 2 may be combined, further subdivided, replicated, or rearranged and additional components may be added according to particular needs. Also, any suitable number of image pairs formed by training images 214 and ground truth images 210 may be produced here and used for machine learning model training.

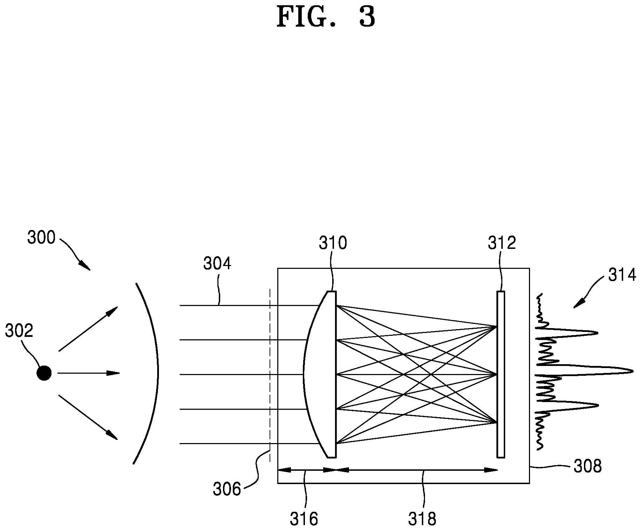

FIG. 3 illustrates an example optical transmission model 300 used in the architecture 200 of FIG. 2 according to an embodiment of the disclosure. For example, the optical transmission model 300 may be used by the PSF simulation function 204 in order to simulate how light passing through a display to an under-display camera is blurred. As shown in FIG. 3, the optical transmission model 300 assumes that incoming light is received from a simulated point source 302. The simulated point source 302 in this example is assumed to produce light that is temporally and spatially incoherent. Light rays 304 from the simulated point source 302 in this particular example are generally assumed to be parallel, and these light rays 304 are assumed to pass through a display 306 (which may represent a specific design of the display 160) and into a UDC 308 (which may represent the specific imaging sensor 180). The point source 302 is also assumed to lie on an optical axis of the UDC 308 in this example.

The UDC 308 in this example is modeled using a lens 310 (such as a thin lens) and an imaging sensor 312. The light rays 304 pass though the display 306 and the lens 310, and the display 306 and the lens 310 collectively cause at least some of the light rays 304 to change paths (or in some cases be blocked). This causes the light rays 304 to strike the imaging sensor 312 in a non-ideal manner, namely because blurring may be generated by passage of the light rays 304 through the display 306 and the lens 310. In this example, the simulated light rays 304 striking the imaging sensor 312 may be used to generate a point spread function 314, which represents the blurring generated by the presence of the display 306 over the UDC 308. The point spread function 314 may be determined or expressed in any suitable manner. In an embodiment, for example, the point spread function 314 is determined using an absolute square of a wavefront of light from the simulated point source 302 passing through the display 306 and the lens 310 and striking the imaging sensor 312.

In an embodiment, it may be assumed that the display 306 has a zero thickness, and it may be assumed that an aperture through which the light rays 304 enter an electronic device or the UDC 308 has a zero thickness. These assumptions may help to simplify the simulation of the operation of an electronic device that includes the display 306 and the UDC 308. However, other simulations may not make these assumptions. Also, in this example, there is a gap 316 between the display 306 and the lens 310 of the UDC 308, and there is a gap 318 between the lens 310 and the imaging sensor 312 of the UDC 308. The point spread function 314 for the UDC 308 here varies based on these two gaps 316 and 318 because these gaps may affect the blurring of the light rays 304. In an embodiment, the gap 316 may range from about 0.3 millimeters to about 1.0 millimeters (inclusive), and the gap 318 may range from about 21.0 millimeters to about 27.0 millimeters (inclusive). However, these values are for illustration only and may easily vary based on the specific design being used.

Although FIG. 3 illustrates one example of the optical transmission model 300 used in the architecture 200 of FIG. 2, various changes may be made to FIG. 3. For example, the UDC 308 may be modeled in any other suitable manner, such as by using the multiple lenses 310 or the different point sources 302. Also, while the point source 302 is shown here as being on the optical axis of the UDC 308, the optical transmission model 300 may similarly be used to generate point spread functions based on other incident light angles.

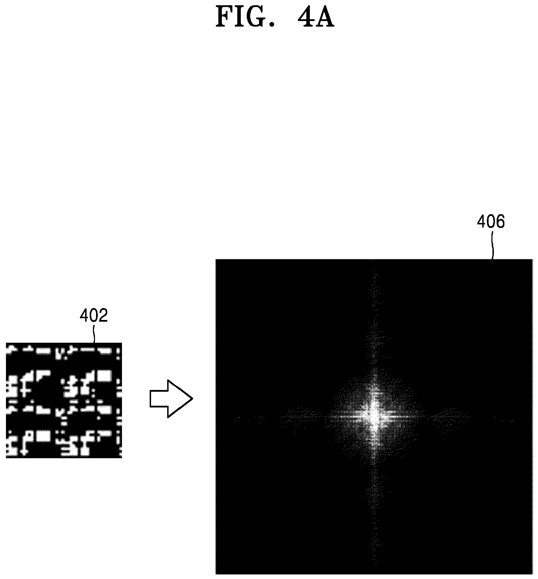

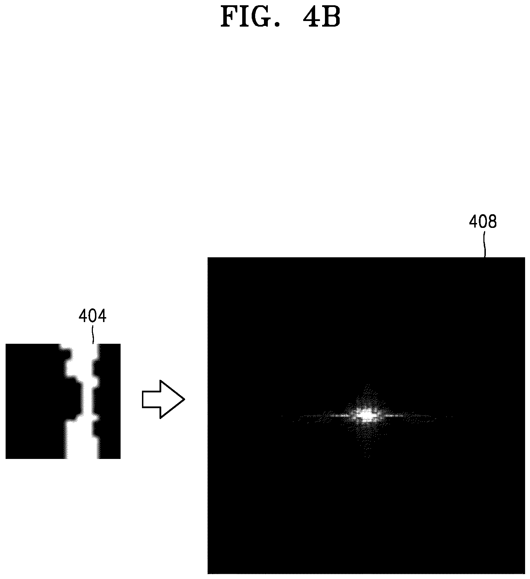

FIGS. 4A and 4B illustrate example display grid patterns 402 and 404 and corresponding point spread functions 406 and 408 according to an embodiment of the disclosure. For example, the display grid patterns 402 and 404 may represent repeating patterns used in the display 160 or 306 described above, and the point spread functions 406 and 408 may represent the point spread functions 206 or 314 described above.

As described above, in an embodiment, the layout or other physical construction of the display 160 or 306 may be described using a grid including a repeating pattern. In that case, the optical transmission model 300 may be constructed using a display grid pattern 402 or 404, which may be defined in a PNG or other binary file in some embodiments. An input may also be received identifying an aperture size and the size of the display or the display grid pattern 402 or 404, such as when the input includes information defining the size of each cell (the size of one instance of the display grid pattern 402 or 404) or the overall size of the display 160 or 306 and the number of cells including the display grid pattern 402 or 404 horizontally and vertically in the display 160 or 306. Using the actual layout of the display 160 or 306, it is possible to simulate how light interacts with the display 160 or 306 and the UDC 308 in order to determine the appropriate point spread function 406 or 408. In an embodiment, the appropriate point spread function 406 or 408 may be generated even before any display 160 or 306 having the display grid pattern 402 or 404 is actually manufactured. This is because the point spread functions 406 and 408 may be generated to realistically act as good estimations of the image quality of light passing through different types of displays.

As may be seen here, different display grid patterns 402 and 404 may result in different point spread functions 406 and 408 being identified by the PSF simulation function 204. This is because the different display grid patterns 402 and 404 will alter light passing through the display 160 or 306 differently, resulting in different blur kernels being generated. However, using knowledge of the different display grid patterns 402 and 404, the PSF simulation function 204 may use the optical transmission model 300 and other information in order to simulate how the light rays 304 may be affected by the different display grid patterns 402 and 404, allowing the suitable point spread functions 406 and 408 to be generated. As described above, each of the point spread functions 406 and 408 may be used to modify ground truth images 210 in order to simulate the types of images that might be captured by a UDC 308. This generates training images 214, and the ground truth images 210 and the training images 214 may be used as image pairs during training of a suitable machine learning model 220 to perform UDC image restoration. As a result, the different machine learning models 220 may be trained to perform UDC image restoration for displays having the different display grid patterns 402 and 404.

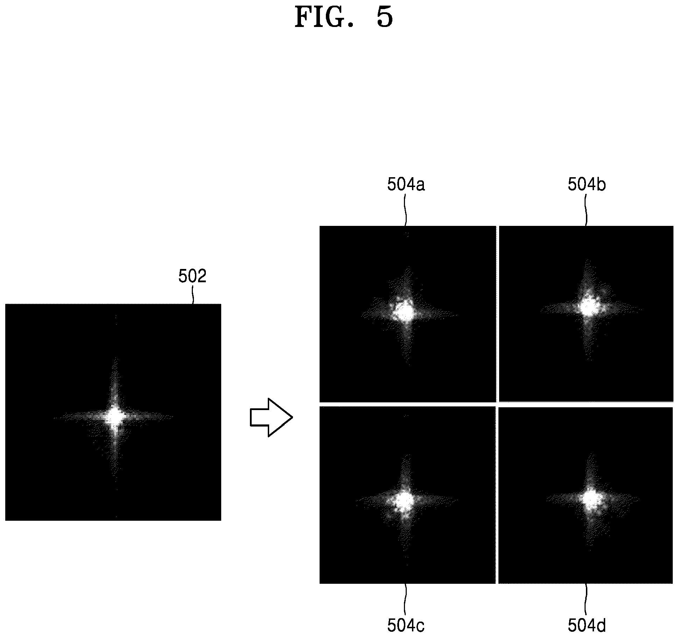

Moreover, as noted above, the PSF simulation function 204 has the ability to generate spatially-variant point spread functions, which means that a point spread function may vary based on location of the display 306 or the imaging sensor 312. FIG. 5 illustrates an example display grid pattern 502 and a corresponding spatially-variant point spread functions 504a to 504d according to an embodiment of the disclosure. Again, the display grid pattern 502 may represent a repeating pattern used in the display 160 or 306 described above, and the point spread functions 504a to 504d may represent one of the point spread functions 206 or 314 described above. Here, the spatially-variant point spread functions 504a to 504d are shown for four corners of a display, and the spatially-variant point spread functions 504a to 504d are clearly nonuniform (indicating that blur is not constant at these four corners of the display).

The non-uniformity of the spatially-variant point spread functions 504a to 504d may be obtained in various ways. For example, the PSF simulation function 204 may obtain the spatially-variant point spread functions 504a to 504d by considering various distortions (e.g., aberration) occurred while light (e.g., a point light source) passes through an optical system. In an embodiment, the PSF simulation function 204 may consider the effects of spherical aberration, primary coma aberration, and primary astigmatism aberration of the light rays 304 based on the field-of-view of the UDC 308.

In an embodiment, the PSF simulation function 204 may obtain the spatially-variant point spread functions 504a to 504d based on at least one of spherical aberration, primary coma aberration, or primary astigmatism aberration of the light rays 304 based on the field-of-view of the UDC 308.

In the disclosure, spherical aberration may represent a phenomenon in which light rays are refracted differently at the center and edge of a lens. In an embodiment, the PSF simulation function 204 may model spherical aberration of the lens 310. The PSF simulation function 204 may obtain the spatially-variant point spread functions 504a to 504d by using the modeled spherical aberration.

In the disclosure, the primary coma aberration may represent an aberration that occurs when rays out of the center of the lens pass through the lens. In an embodiment, the PSF simulation function 204 may model the primary coma aberration of the lens 310. The PSF simulation function 204 may obtain the spatially-variant point spread functions 504a to 504d by using the modeled primary coma aberration.

In the disclosure, the primary astigmatism aberration may represent a phenomenon in which light rays passing through the lens are concentrated differently on a vertical axis and a horizontal axis. In an embodiment, the PSF simulation function 204 may model the primary astigmatism aberration of the lens 310. The PSF simulation function 204 may obtain the spatially-variant point spread functions 504a to 504d by using the modeled primary astigmatism aberration.

Although FIGS. 4A, 4B, and 5 illustrate examples of display grid patterns and corresponding point spread functions, various changes may be made to FIGS. 4A, 4B, and 5. For example, the display grid patterns shown here are examples only and may easily vary depending on the specific display being used. Also, the corresponding point spread functions shown here may easily vary based on various design parameters of an electronic device, a display, or a UDC (such as one or more distances defining one or more of the gaps 316 and 318 described above).

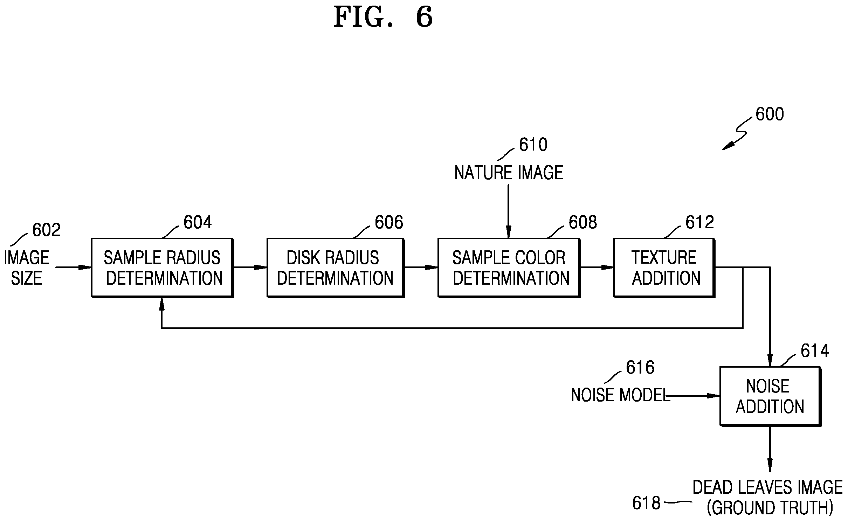

FIG. 6 illustrates an example architecture 600 for generating synthetic ground truth images using a dead leaves model according to an embodiment of the disclosure. The architecture 600 may, for example, be used within the synthetic image generation function 208 of FIG. 2. For ease of explanation, the architecture 600 shown in FIG. 6 is described as being implemented on or supported by the server 106 in the network configuration 100 of FIG. 1. However, the architecture 600 shown in FIG. 6 may be used with any other suitable device(s) and in any other suitable system(s), such as when the architecture 600 is implemented on or supported by the electronic device 101.

In an embodiment, a dead leaves model may generate a ground truth image. Here, the ground truth image may be used as a training dataset required for training a machine learning model for UDC image restoration. In an embodiment, the dead leaves model may generate a ground truth image based on a probability distribution with respect to at least one of the size, shape, position, or color of an object to be included in the ground truth image.

In general, a dead leaves model may be used to produce synthetic ground truth images by performing a sequential superimposition of random closed sets. For example, two-dimensional textured objects (such as discs) may be sampled from a shape and size distribution and placed into an image at random positions. The two-dimensional textured objects may be placed into the image such that various two-dimensional textured objects occlude one another. This type of approach may be provided as a natural tool to study occlusion phenomena, which is often useful or important in the formation of visual images.

As shown in FIG. 6, the architecture 600 may receive an image size 602 as an input. The image size 602 may define the desired or required size of the synthetic ground truth images 210 to be generated using the architecture 600. In an embodiment, for example, the image size 602 may define the horizontal resolution in pixels (referred to as m) and vertical resolution in pixels (referred to as n) of the synthetic ground truth images 210 to be generated. The image size 602 may be obtained by a user input or a manufacturer's setting.

The image size 602 is provided to a sample radius determination function 604, which may identify minimum and maximum sizes (such as minimum and maximum radii) of random discs to be used as "leaves" when generating synthetic ground truth images. In the disclosure, "leaves" may mean objects overlapped and arranged in an image. Any suitable techniques may be used to identify the minimum and maximum sizes of the random discs. In an embodiment, for example, the maximum size may have a value of one, which may indicate that a disc may fill the entire space horizontally, vertically, or both within a synthetic ground truth image. Also, in an embodiment, the minimum size may have a value of 3/max(m,n). However, any other suitable values may be used here as the minimum and maximum sizes.

A disc radius determination function 606 may use the minimum and maximum disc sizes (as determined by the sample radius determination function 604) and randomly select disc sizes for use in generating a specific ground truth image. For example, the disc radius determination function 606 may use a uniform distribution of sizes between the minimum and maximum disc sizes and randomly select a disc size for use at a specific location (x,y) within a ground truth image being generated. This may be repeated for any number of specific locations within the ground truth image being generated, and the values of x and y may also be randomly selected (such as based on uniform distributions in the ranges 1 ≤ x ≤ m and 1 ≤ y ≤ n). This allows for the selection of random disc sizes at random locations with the specific ground truth image being generated.

A sample color determination function 608 may determine what colors are applied to the random discs generated by the disc radius determination function 606. For example, the sample color determination function 608 may obtain at least one image 610 of a natural scene, such as an image of actual dead leaves or some other image including various colors. The sample color determination function 608 may determine a distribution of colors in the different images 610 or in different portions of the same image 610, such as by generating histograms of the color distributions. The image(s) 610 may be obtained from any suitable source(s), such as a public or private repository including images of natural scenes (likes scenes including mountains, lakes, forests, human-made structures, combinations thereof, etc.) As a particular example, the sample color determination function 608 may determine a distribution of colors in the one or more images 610 and randomly select colors from the identified distribution for the random discs generated by the disc radius determination function 606. In this way, the sample color determination function 608 may help to replicate natural color distributions within the ground truth images being generated using natural image samples.

A texture addition function 612 may determine what textures are applied to the random discs generated by the disc radius determination function 606. For example, the texture addition function 612 may randomly select a texture from a given set of textures for each random disc generated by the disc radius determination function 606. As a particular example, the texture addition function 612 may randomly select a texture from the Brodatz texture set (a public dataset of various textures in grayscale images) or other set, and the selected textures may be alpha-blended or otherwise applied to the random discs generated by the disc radius determination function 606.

The functions 604, 606, 608, and 612 may be repeated one or more times if necessary. For example, in an embodiment, the functions 604, 606, 608, and 612 may be repeated until an entire image is filled with colored and textured discs. In an embodiment, the number of repetitions of the functions 604, 606, 608, and 612 may be predefined by a user or a manufacturer's setting.

A noise addition function 614 may add noise to the image, where the noise is defined using a noise model 616. The noise model 616 may be used to define any suitable type(s) and level(s) of noise to be added to an image, such as Poisson noise. The noise addition function 614 may therefore add random noise and random amounts of noise to the ground truth images being generated, such as to simulate sensor noise generated during operation of one or more imaging sensors. The resulting image may represent a dead leaves image 618, which may be used as one of the ground truth images 210. The architecture 600 may repeat this process any suitable number of times to produce any suitable number of dead leaves images 618. Note that if the dead leaves images 618 are generated using certain data value types (such as 8-bit or 16-bit unsigned integers), pixel values of the dead leaves images 618 may be used directly without scaling. When other data value types are used in the dead leaves images 618, scaling may occur prior to usage of the dead leaves images 618.

According to an embodiment, the use of a dead leaves model to produce ground truth images 210 may provide various benefits. For example, a dead leaves model may be used to produce images having natural image statistics because the statistics (such as color distributions) of one or more natural images 610 may be used when generating the dead leaves images 618. Also, a dead leaves model may provide scale invariance, which means that downscaling and upscaling of image sizes may result in pattern changes but little or no statistic changes. Thus, for example, the dead leaves images 618 may have similar marginal and bivariate statistics as natural images. In addition, the pattern statistics may be generally invariant to magnification, cropping, or pixel dimensions. However, as noted above, other techniques may be used to produce the ground truth images 210, such as when the ground truth images 210 are generated using one or more generative adversarial networks, generated using one or more transformer-based neural networks, or generated by performing random natural object and background fusion. The disclosure is not limited to the generation of ground truth images 210 using a dead leaves model.

It should be noted that the functions shown in or described with respect to FIG. 6 may be implemented in the electronic device 101, the server 106, or other device in any suitable manner. For example, in an embodiment, at least some of the functions shown in or described with respect to FIG. 6 may be implemented or supported using one or more software applications or other software instructions that are executed by the processor 120 of the electronic device 101, server 106, or other device. In an embodiment, at least some of the functions shown in or described with respect to FIG. 6 may be implemented or supported using dedicated hardware components. In general, the functions shown in or described with respect to FIG. 6 may be performed using any suitable hardware or any suitable combination of hardware and software/firmware instructions. Also, the functions shown in or described with respect to FIG. 6 may be performed by a single device or by multiple devices.

Although FIG. 6 illustrates one example of an architecture 600 for generating synthetic ground truth images using a dead leaves model, various changes may be made to FIG. 6. For example, various components in FIG. 6 may be combined, further subdivided, replicated, or rearranged and additional components may be added according to particular needs. Also, any suitable number of dead leaves images 618 may be produced here and used for machine learning model training.

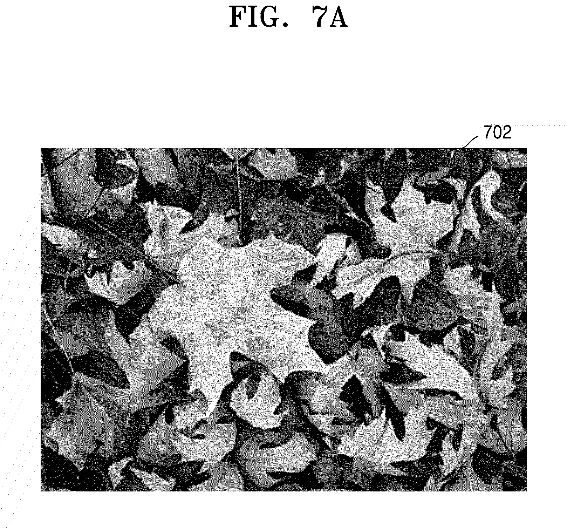

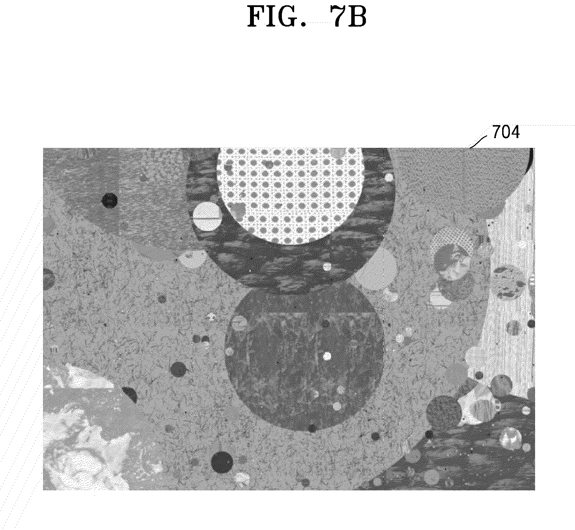

FIGS. 7A and 7B illustrate an example natural image 702 and an example synthetic ground truth image 704 generated using a dead leaves model according to an embodiment of the disclosure. For example, the natural image 702 may represent an example of the natural image 610 obtained and used by the architecture 600, and the synthetic ground truth image 704 may represent an example of the dead leaves image 618 generated by the architecture 600.

As may be seen in FIG. 7A, the natural image 702 may represent an image of actual dead or dying leaves. In this example, the leaves in the natural image 702 may have a random assortment of sizes, shapes, colors, and textures. Also, various leaves may occlude other leaves. Similarly, as may be seen in FIG. 7B, the synthetic ground truth image 704 represents a synthetic image including a number of circular discs, where the discs may have a random assortment of sizes, shapes, colors, and textures. Also, various discs may occlude other discs. In this example, the colors of the discs in the synthetic ground truth image 704 of FIG. 7B may be randomly selected, such as from a distribution of the colors contained in the natural image 702 of FIG. 7A.

Although FIGS. 7A and 7B illustrate one example of the natural image 702 and one example of the synthetic ground truth image 704 generated using a dead leaves model, various changes may be made to FIGS. 7A and 7B. For example, any other suitable natural image or images may be obtained by the architecture 600 and used during the generation of the dead leaves image 618. Also, the contents of the dead leaves image 618 may easily vary given the random nature of the image generation process.

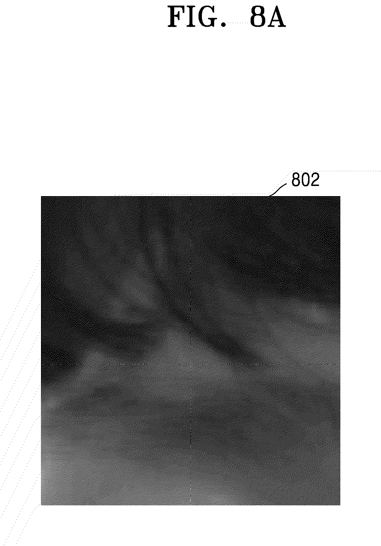

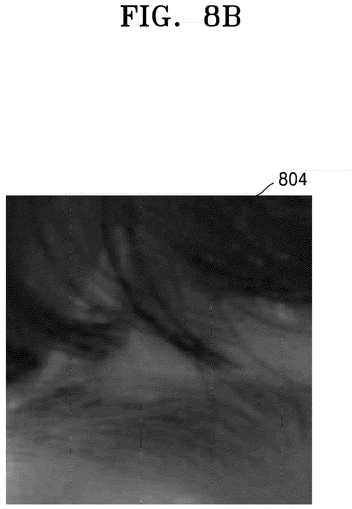

FIGS. 8A and 8B illustrate example results obtained using a machine learning model trained to perform UDC image restoration according to an embodiment of the disclosure. For example, the machine learning model may be trained using the architecture 200 shown in FIG. 2 and described above. In FIG. 8A, a portion of an image 802 may capture part of a person's face, including an eyebrow above one of the person's eyes. The image 802 may, for example, may represent a blurred image captured using an under-display camera. The image 802 here contains a relatively large amount of blur, which may cause finer details in the image 802 to become lost.

In FIG. 8B, an image 804 of the same part of the person's face is shown. The image 804 may, for example, represent a sharpened output image generated using a trained machine learning model 220. As may be seen here, the image 804 is sharper, and at least a significant portion of the blur contained in the original image 802 has been removed in the image 804. As a result, the image 804 shows finer details of the scene that might otherwise be lost due to the presence of the blur, such as individual hairs in the person's eyebrow. Thus, it is possible to train a machine learning model 220 to perform UDC image restoration using partially- or completely-synthetic training data in the training dataset 216 and still achieve good results using the trained machine learning model 220. In an embodiment, the machine learning model 220 that is trained using completely-synthetic training data in the training dataset 216 may achieve comparable or even better results compared to machine learning models trained using actual images of real-world scenes.

Although FIGS. 8A and 8B illustrate one example of results obtained using a machine learning model trained to perform UDC image restoration, various changes may be made to FIGS. 8A and 8B. For example, images of scenes may vary widely, and the blur contained in the images may also vary based on the circumstances. As a result, FIGS. 8A and 8B are merely meant to illustrate one example of the type of results that may be obtained using the approaches described in the disclosure. However, FIGS. 8A and 8B do not limit the scope of the disclosure to any particular type of results.

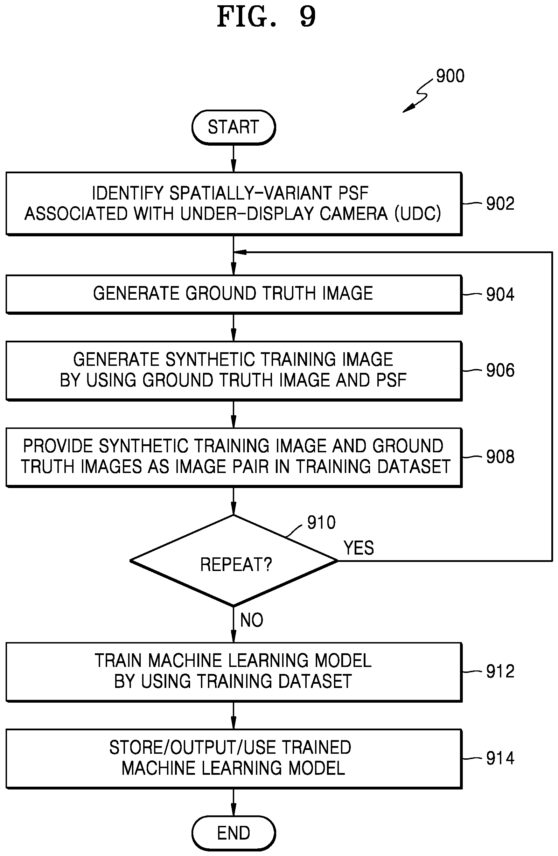

FIG. 9 illustrates an example method 900 of generating training data and training a machine learning model to perform UDC image restoration according to an embodiment of the disclosure. For ease of explanation, the method 900 shown in FIG. 9 is described as being performed by the server 106 in the network configuration 100 of FIG. 1, where the server 106 may implement the architectures 200 and 600 shown in FIGS. 2 and 6. However, the method 900 shown in FIG. 9 may be used with any other suitable device(s) and in any other suitable system(s), such as when the method 900 is performed by the electronic device 101.

As shown in FIG. 9, a spatially-variant point spread function associated with a UDC is identified in operation 902. This may include, for example, the processor 120 of the server 106 performing the PSF simulation function 204 using the one or more display parameters 202 (such as an image of a repeating display grid pattern in a display to be used with the UDC and a size of the display grid pattern) and an optical transmission model that models a UDC (such as by using the lens 310 and the imaging sensor 312). The PSF simulation function 204 may generate the simulated point spread function 206 that defines how images may be blurred when light passes through the display and the UDC.

A ground truth image is generated in operation 904. This may include, for example, the processor 120 of the server 106 performing the synthetic image generation function 208 in order to generate the ground truth image 210. As a particular example, this may include the processor 120 of the server 106 using a dead leaves model and at least one natural image 610 to generate the dead leaves image 618 including various discs (some occluding others) with random colors and textures. A synthetic training image is generated using the ground truth image and the spatially-variant point spread function in operation 906. This may include, for example, the processor 120 of the server 106 performing the synthetic image generation function 212 to apply one or more convolutions to the ground truth image 210 based on the simulated point spread function 206 in order to generate the training image 214. The synthetic training image and the ground truth image are provided as an image pair in a training dataset in operation 908. This may include, for example, the processor 120 of the server 106 storing the training image 214 and the ground truth image 210 in the training dataset 216 for use during machine learning model training. A determination is made whether to repeat certain operations and generate one or more additional image pairs in operation 910. This may include, for example, the processor 120 of the server 106 determining whether a desired number of image pairs have been produced for the training dataset 216. If not, the process returns to operation 904 to generate an additional image pair.

Otherwise, a machine learning model is trained using the training dataset in operation 912. This may include, for example, the processor 120 of the server 106 performing the model training function 218 in order to train the at least one machine learning model 220 using the training dataset 216. As a particular example, this may include the processor 120 of the server 106 iteratively (i) providing the training images 214 to the machine learning model being trained, (ii) obtaining output images from the machine learning model based on the training images 214, (iii) comparing the output images to the ground truth images 210, (iv) calculating one or more loss values based on differences/errors between the output images and the ground truth images 210, and (v) adjusting weights or other parameters of the machine learning model to reduce the loss value(s). Once training is completed, the trained machine learning model is stored, output, or used in operation 914. This may include, for example, the processor 120 of the server 106 providing the trained machine learning model 220 to one or more electronic devices (such as the electronic device 101) for use in processing images from UDCs.

Although FIG. 9 illustrates one example of the method 900 of generating training data and training a machine learning model to perform UDC image restoration, various changes may be made to FIG. 9. For example, while shown as a series of operations, various operations in FIG. 9 may overlap, occur in parallel, occur in a different order, or occur any number of times.

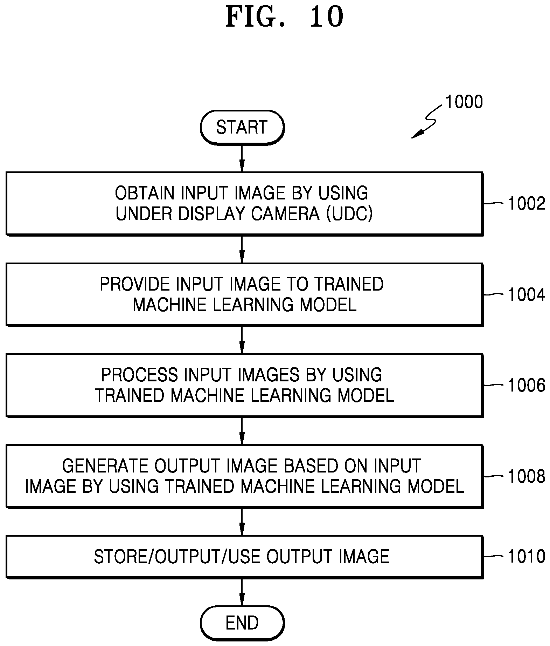

FIG. 10 illustrates an example method 1000 of using a trained machine learning model to perform UDC image restoration according to an embodiment of the disclosure. For ease of explanation, the method 1000 shown in FIG. 10 is described as being performed by the electronic device 101 in the network configuration 100 of FIG. 1. However, the method 1000 shown in FIG. 10 may be used with any other suitable device(s) and in any other suitable system(s), such as when the method 1000 is performed by the server 106.

As shown in FIG. 10, an input image is obtained using a UDC in operation 1002. This may include, for example, the processor 120 of the electronic device 101 receiving an image captured using the UDC 308. The captured image may contain blur caused by (among other things) optical diffraction and noise due to the presence of the display 306 in front of the UDC 308. The input image is provided to a trained machine learning model in operation 1004. This may include, for example, the processor 120 of the electronic device 101 providing the image data of the input image as input to the trained machine learning model 220.

The input image is processed using the trained machine learning model in operation 1006, and an output image is generated using the trained machine learning model in operation 1008. This may include, for example, the processor 120 of the electronic device 101 using the trained machine learning model 220 to reduce or minimize the amount of blur contained in the output image. The output image may be stored, output, or used in some manner in operation 1010. This may include, for example, the processor 120 of the electronic device 101 displaying the output image on the display 160 or 306 of the electronic device 101. This may also or alternatively include the processor 120 of the electronic device 101 saving the output image to a camera roll stored in the memory 130 of the electronic device 101. This may also or alternatively include the processor 120 of the electronic device 101 attaching the output image to a text message, email, or other communication to be transmitted from the electronic device 101. Of course, the output image may be used in any other or additional manner.

Although FIG. 10 illustrates one example of the method 1000 of using the trained machine learning model to perform UDC image restoration, various changes may be made to FIG. 10. For example, while shown as a series of operations, various operations in FIG. 10 may overlap, occur in parallel, occur in a different order, or occur any number of times.

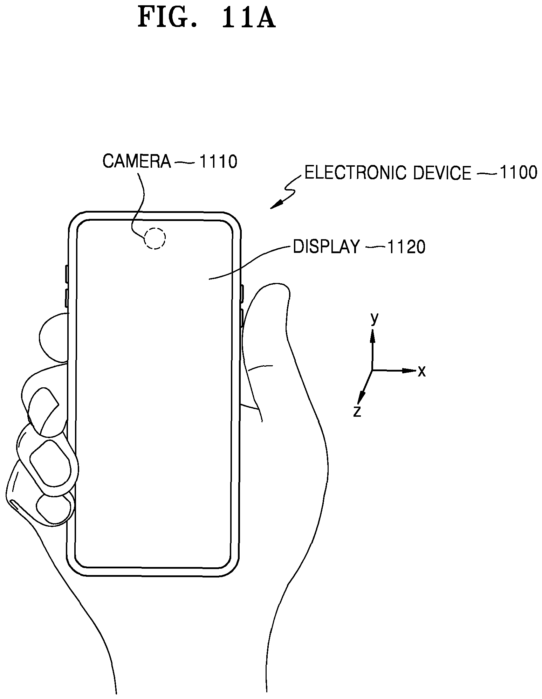

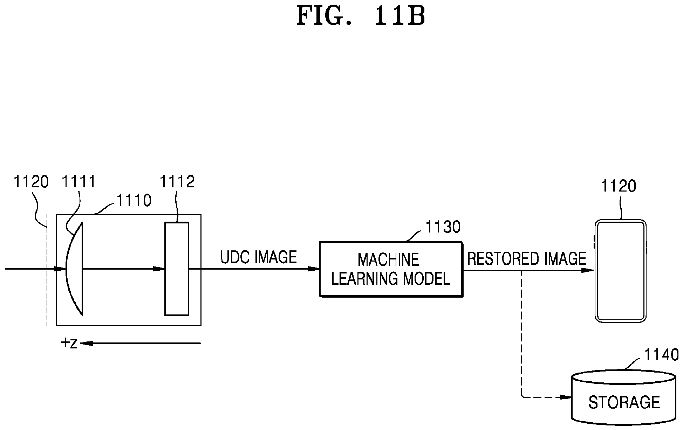

FIGS. 11A and 11B illustrate an example operation of an electronic device performing UDC image restoration according to an embodiment of the disclosure. For ease of explanation, the configuration, operation, and function of an electronic device 1100 shown in FIGS. 11A and 11B may correspond to the configuration, operation, and function of the electronic device 101 in the network configuration 100 of FIG. 1. However, the disclosure is not limited thereto, and the configuration, operation, and function of an electronic device 1100 shown in FIGS. 11A and 11B may correspond to the configuration, operation, and function of any other suitable device(s) and in any other suitable system(s).

As shown in FIGS. 11A and 11B, the electronic device 1100 may include a camera 1110 and a display 1120. The configurations, operations, and functions of the camera 1110 and the display 1120 may correspond to the configurations, operations, and functions of the sensor 180 and the display 160 of FIG. 1. Therefore, descriptions redundant with those given with reference to FIG. 1 are omitted below.

Referring to FIG. 11A, the camera 1110 may be disposed under the display 1120. For example, it is assumed that display 1120 is a plane with a first direction (e.g., a positive direction of a z-axis) as the direction of a normal vector. In this case, the camera 1110 may be spaced apart from the display 1120 in a second direction (e.g., a negative direction of the z-axis). The camera 1110 may be disposed inside the electronic device 1100.

The electronic device 1100 may obtain a UDC image by using the camera 1110. A user may capture a scene by using the camera 1110 of the electronic device 1100. The camera 1110 may convert the captured scene into an electrical signal. The electronic device 1100 may obtain (e.g., generate) the UDC image based on the electrical signal.

Referring to FIG. 11B, the camera 1110 may include a lens 1111 and a sensor 1112. The lens 1111 may receive light reflected by an object, a landscape, etc. to be photographed. The lens 1111 may be moved by, for example, an actuator (not shown). As a position of the lens 1111 changes according to the movement of the lens 1111, a focal length of the lens 1111 may change. As a result, the focus on the object may be adjusted.

The sensor 1112 may be an image sensor. The sensor 1112 may include normal pixels for obtaining color information about the object. The normal pixels of the sensor 1112 may generate an electrical signal based on light received through the lens 1111. Furthermore, the sensor 1112 may include phase detection pixels for obtaining phase information about the object. Phase detection pixels for adjusting a focal length may be included. The phase detection pixels of the sensor 1112 may generate an electrical signal used to perform a phase detection auto-focus (PDAF) based on light received through the lens 1111. The sensor 1112 may output image data (e.g., a UDC image) including color information and phase information of the object.

FIG. 11B illustrates only one lens 1111 and one sensor 1112, but in another example, the camera 1110 may include a plurality of lenses and a plurality of sensors. The plurality of sensors may be provided to have different functions, different performances, and/or different characteristics. In this case, the plurality of sensors may include a plurality of lenses having different field of views (FOVs).

The machine learning model 1130 may restore the UDC image. For example, the machine learning model 1130 may output a restored image based on the UDC image. Although not shown, the electronic device 1110 may include at least one processor (not shown) and a memory (not shown). Here, the configurations, operations, and functions of the at least one processor (not shown) and the memory (not shown) may correspond to the configurations, operations, and functions of the processor 120 and the memory 130 of FIG. 1. The at least one processor (not shown) may load the machine learning model 1130 into the memory (not shown). The at least one processor (not shown) may restore the UDC image by processing the UDC image by using the machine learning model 1130 loaded into the memory (not shown).

In an embodiment, although not shown, the camera 1110 may include an image signal processor (ISP) front end block (not shown) and an image signal processor (not shown). The ISP front end block (not shown) may perform various preprocessing operations on image data output from the sensor 1110. For example, the ISP front end block (not shown) may perform crosstalk compensation for a signal output from the sensor 1110, auto dark level compensation (ADLC) for removing fixed pattern noise (FPN), etc. The ISP front end block (not shown) may generate preprocessed image data (e.g., UDC image).

The image signal processor (not shown) may perform various processing operations on the image data processed by the ISP front end block (not shown). For example, the image signal processor (not shown) may perform various processing operations such as color interpolation, auto white balance, gamma correction, color saturation correction, formatting, bad pixel correction, hue correction, etc. The image signal processor (not shown) may generate final image data (e.g., UDC image) on which various processing operations have been performed.

In an embodiment, at least some of the functions of the machine learning model 1130 may be implemented by at least one of the ISP front end block (not shown) or the image signal processor (not shown). In an embodiment, at least some of the functions of the machine learning model 1130 may be implemented by a main processor (e.g., an application processor) that receives and processes a UDC image. The functions of the machine learning model 1130 may be implemented by hardware, software, and/or firmware.

In an embodiment, the electronic device 1100 may display the restored image, which is a result of restoration of the machine learning model 1130, on the display 1120. In an embodiment, the electronic device 1100 may store the restored image. For example, the electronic device 1100 may include a storage 1140. The electronic device 1100 may store the restored image in the storage 1140.

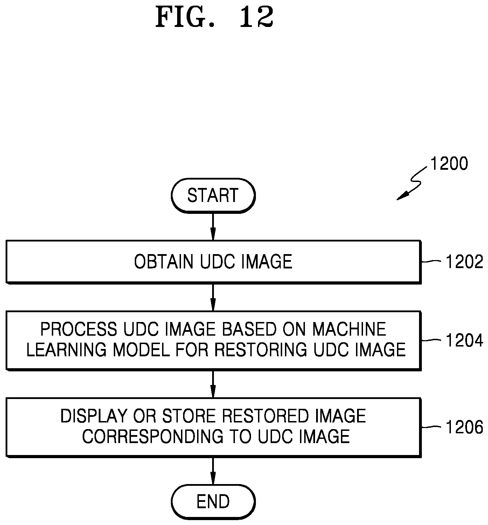

FIG. 12 illustrates an example method 1200 of performing UDC image restoration according to an embodiment of the disclosure. For ease of explanation, the method 1200 shown in FIG. 12 is described as being performed by the electronic device 101 of FIG. 1 or the electronic device 1100 of FIGS. 11A and 11B. However, the method 1200 shown in FIG. 12 may be used with any other suitable device(s) and in any other suitable system(s), such as when the method 1200 is performed by the electronic devices 101 and 1100 or processors of the electronic devices 101 and 1100.

Referring to FIGS. 11A and 11B together with FIG. 12, in operation 1202, the electronic device 1100 may obtain a UDC image. For example, the electronic device 1100 may obtain the UDC image by using the camera 1110 disposed under the display 1120.

In operation 1204, the electronic device 1100 may process the UDC image based on the machine learning model 1130 for restoring the UDC image. The electronic device 1100 may output a restored image by using the machine learning model 1130 that receives the UDC image as an input. In an embodiment, the electronic device 1100 may receive the (trained) machine learning model 1130 from an external source. For example, the external source may be an external device or an external server. For example, the electronic device 1100 may receive the machine learning model 1130 through the communication interface (170 of FIG. 1). In an embodiment, the electronic device 1100 may store the machine learning model 1130 in at least one memory. The electronic device 1100 may process the UDC image by using the machine learning model 1130 stored in the at least one memory.

In an embodiment, the machine learning model 1130 may be pre-trained using (i) a ground truth image and (ii) a synthetic image generated using the ground truth image and a point spread function that is based on an optical transmission model of the display 1120. In an embodiment, the light transmission model may represent how incident light is distorted when transmitted to the camera 1110 through the display 1120 based on a physical layout of the display 1120. In an embodiment, the point spread function may represent a spatially-variant point spread function that varies across the display 1120. In an embodiment, the spatially-variant point spread function may be based on effects of spherical aberration, primary coma aberration, and primary astigmatism aberration of light passing to the camera 1110 through the display 1120.

In an embodiment, the machine learning model 1130 may be trained to reduce blur in a UDC image caused by light passing through the display 1120 before reaching the camera 1110. In one configuration, the machine learning model 1130 may be trained to perform point spread function inversion.

In operation 1206, the electronic device 1100 may display or store the restored image corresponding to the UDC image. For example, the electronic device 1100 may display or store the restored image, which is an output of the machine learning model 1130, on the display 1120 or in the storage 1140.

Although FIG. 12 illustrates one example of the method 1200 of performing UDC image restoration, various changes may be made to FIG. 12. For example, while shown as a series of operations, various operations in FIG. 12 may overlap, occur in parallel, occur in a different order, or occur any number of times.

In an embodiment of the disclosure, an electronic device for performing UDC image restoration may be provided. The electronic device may include a display. The electronic device may include a camera located under the display and configured to capture a UDC image. The electronic device may include at least one memory configured to store instructions. The electronic device may include at least one processor configured to execute the instructions. The at least one processor may be configured to execute the instructions to obtain the UDC image. The at least one processor may be configured to execute the instructions to process the UDC image based on a machine learning model 1130 for restoring the UDC image. The at least one processor may be configured to execute the instructions to display or store the restored image corresponding to the UDC image. The machine learning model (may be trained using (i) a ground truth image and (ii) a synthetic image generated using the ground truth image and a point spread function that is based on an optical transmission model of the display.

In an embodiment, the machine learning model may be trained to reduce blur in the UDC image caused by light passing through the display 1120 prior to reaching the camera.

In an embodiment, the machine learning model may be trained to perform a point spread function inversion.

In an embodiment, the at least one processor may be configured to execute the instructions to receive the machine learning model 1130 from an external source. The at least one processor may be configured to execute the instructions to store the machine learning model 1130 in the at least one memory.

In an embodiment, the optical transmission model may represent how incoming light is distorted when passing to the camera through the display 1120 based on a physical layout of the display.

In an embodiment, the point spread function may represent a spatially-variant point spread function that varies across the display.

In an embodiment, the spatially-variant point spread function may be based on effects of spherical aberration, primary coma aberration, and primary astigmatism aberration of light passing to the camera through the display.

In an embodiment of the disclosure, a method of performing UDC image restoration may be provided. The method may include obtaining a UDC image captured using a camera located under a display. The method may include processing, using at least one processing device of an electronic device, the UDC image based on a machine learning model for restoring the UDC image. The method may further include displaying or storing the restored image corresponding to the UDC image. The machine learning model may be trained using (i) a ground truth image and (ii) a synthetic image generated using the ground truth image and a point spread function that is based on an optical transmission model of the display.

In an embodiment of the disclosure, a computer-readable recording medium having recorded thereon a program for executing the method on a computer may be provided.

An embodiment of the disclosure may be implemented in the form of a recording medium including instructions executable by a computer, such as program modules executed by a computer. The computer-readable recording medium may be any available medium accessible by a computer and includes volatile and non-volatile media and separable and non-separable media. In addition, the computer-readable recording medium may include a computer storage medium and a communication medium. The computer-readable recording medium includes volatile and non-volatile media and separable and non-separable media, which are implemented by any method or technique for storing information, such as computer-readable instructions, data structures, program modules, or other data. Communication media may typically include computer-readable instructions, data structures, or other data of modulated data signals, such as program modules.

A machine-readable storage medium may be provided in the form of a non-transitory storage medium. Here, the term "non-transitory storage medium" only means that the storage medium is tangible and does not include signals (for example, electromagnetic waves), whether data is semi permanently or temporarily stored in the storage medium or not. For example, the "non-transitory storage medium" may include a buffer in which data is temporarily stored.

According to an embodiment, a method according to various embodiments may be provided while included in a computer program product. The computer program product may be traded as merchandise between a seller and a purchaser. The computer program product may be distributed in the form of a machine-readable storage medium (e.g., CD-ROM) or may be distributed (for example, downloaded or uploaded) online through an application store or directly between two user devices (e,g,, smartphones). In the case of online distribution, at least a portion of the computer program product (for example, a downloadable app) may be at least temporarily stored in a machine-readable storage medium, such as a memory of a server of a manufacturer, a server of an application store, or a relay server, or may be temporarily generated.

Although the disclosure has been described with reference to various example embodiments, various changes and modifications may be suggested to one skilled in the art. It is intended that the disclosure encompass such changes and modifications as fall within the scope of the appended claims.

## Claims

1. An electronic device (1100) for performing under-display camera (UDC) image restoration, the electronic device comprising:
a display (1120);
a camera located under the display and configured to capture a UDC image (1110);
at least one memory configured to store instructions; and
at least one processor configured to execute the instructions to:
obtain the UDC image;
process the UDC image, based on a machine learning model (1130) for restoring the UDC image; and
display or store the restored image corresponding to the UDC image,
wherein the machine learning model (1130) is trained using (i) a ground truth image and (ii) a synthetic image generated using the ground truth image and a point spread function that is based on an optical transmission model of the display (1120).

2. The electronic device (1100) of claim 1, wherein the machine learning model (1130) is trained to reduce blur in the UDC image caused by light passing through the display (1120) prior to reaching the camera (1110).

3. The electronic device (1100) of any one of claims 1 and 2, wherein the machine learning model (1130) is trained to perform a point spread function inversion.

4. The electronic device (1100) of any one of claims 1 to 3, wherein the at least one processor is configured to execute the instructions to:
receive the machine learning model (1130) from an external source; and store the machine learning model (1130) in the at least one memory.

5. The electronic device (1100) of any one of claims 1 to 4, wherein the optical transmission model represents how incoming light is distorted when passing to the camera (1110) through the display (1120), based on a physical layout of the display (1120).

6. The electronic device (1100) of any one of claims 1 to 5, wherein the point spread function represents a spatially-variant point spread function that varies across the display (1120).

7. The electronic device (1100) of claim 6, wherein the spatially-variant point spread function is based on effects of spherical aberration, primary coma aberration, and primary astigmatism aberration of light passing to the camera (1110) through the display (1120).

8. A method (1200) of performing under-display camera (UDC) image restoration, the method comprising:
obtaining an under-display camera (UDC) image captured using a camera (1110) located under a display (1120) (1202);
processing the UDC image based on a machine learning model (1130) for restoring the UDC image by using at least one processing device of an electronic device (1204); and
displaying or storing the restored image corresponding to the UDC image (1206);
wherein the machine learning model (1130) is trained using (i) a ground truth image and (ii) a synthetic image generated using the ground truth image and a point spread function that is based on an optical transmission model of the display (1120).

9. The method (1200) of claim 8, wherein the machine learning model (1130) is trained to reduce blur in the UDC image caused by light passing through the display (1120) prior to reaching the camera (1110).

10. The method (1200) of any one of claims 8 and 9, wherein the machine learning model (1130) is trained to perform a point spread function inversion.

11. The method (1200) of any one of claims 8 to 10, further comprising: receiving the machine learning model (1130) from an external source; and storing the machine learning model (1130) in at least one memory of the electronic device.

12. The method (1200) of any one of claims 8 to 11, wherein the optical transmission model represents how incoming light is distorted when passing to the camera (1110) through the display (1120), based on a physical layout of the display (1120).

13. The method (1200) of any one of claims 8 to 12, wherein the point spread function represents a spatially-variant point spread function that varies across the display (1120).

14. The method (1200) of claim 13, wherein the spatially-variant point spread function is based on effects of spherical aberration, primary coma aberration, and primary astigmatism aberration of light passing to the camera (1110) through the display (1120).

15. A computer-readable medium comprising instructions that when executed cause at least one processor to perform a method of any one of claims 8 to 14.
